# FASCICULE DE BREVET EUROPEEN

(11) **EP 2 353 054 B1**
(45) Date de publication et mention de la délivrance du brevet: **02.01.2013**
(21) Numéro de dépôt: 09768170.4
(22) Date de dépôt: 10.11.2009
(51) Int. Cl.: G05D 23/19

(54) **DISPOSITIF DE REGULATION AUTOMATIQUE POUR UN APPAREIL DE CHAUFFAGE ELECTRIQUE**
AUTOMATISCHE STEUEREINRICHTUNG FÜR EINE ELEKTRISCHE HEIZVORRICHTUNG
AUTOMATIC CONTROL DEVICE FOR AN ELECTRICAL HEATING APPLIANCE

(30) Priorité: 10.11.2008 FR 0857633; 24.02.2009 FR 0951155
(43) Date de publication de la demande: 10.08.2011
(73) Titulaire: Martinez, Thierry M., 17300 Blanes, Barcelona (ES); Carbonnier, Jean-Louis, 85190 Aizenay (FR)
(72) Inventeur: Martinez, Thierry M., 17300 Blanes, Barcelona (ES); Carbonnier, Jean-Louis, 85190 Aizenay (FR)
(74) Mandataire: Rhein, Alain
(86) Numéro de dépôt international: PCT/FR2009/052162
(87) Numéro de publication internationale: WO 2010/052442

(56) Documents cités:
- US-A- 5 814 954
- US-B1- 7 312 593

## Description

L'invention concerne un dispositif de régulation automatique pour un appareil de chauffage électrique comportant un redresseur-inverseur, dont une entrée est reliée au réseau d'électricité et dont une sortie est reliée à un circuit comprenant un transistor bipolaire à porte isolée (IGBT) relié en série avec au moins une résistance d'un chauffage électrique, des moyens électroniques de contrôle conçus aptes à recevoir des données d'un sélecteur de température actionnable par l'utilisateur, ledit sélecteur étant conçu apte à permettre le choix de la température ambiante à atteindre dans la pièce où est installée l'appareil de chauffage électrique, d'au moins un capteur de température, à savoir un capteur de température de la température ambiante

La présente invention entre dans le domaine plus particulier des appareils de chauffage électrique domestique.

Dans la suite de notre description on entendra par appareil de chauffage, un appareil de chauffage électrique.

Dans le domaine des appareils de chauffage le fonctionnement habituellement connu est l'utilisation de résistances électriques parcourues par un courant transformant ainsi l'énergie électrique en énergie calorifique qui est transmise à l'environnement par convection. En effet ce type de dispositif comporte de manière générale une ouverture en partie basse, ou entre l'air froid, et une ouverture en partie haute, ou ressort l'air chauffé par les résistances.

Les premiers appareils de chauffage de ce type comprenaient seulement un interrupteur marche/arrêt, ce qui permettait uniquement à l'utilisateur de faire ou non fonctionner l'appareil de chauffage, sans pouvoir régler la température souhaitée. Pour pallier cet inconvénient, les appareils de chauffage électrique de la génération suivante comportaient des moyens de réglages permettant, au gré du réglage initié par l'utilisateur, de mettre en fonctionnement une ou plusieurs résistances, tandis qu'un thermostat permettait de réguler ce fonctionnement selon la température ambiante.

Cependant malgré la présence d'une consigne mesurée par le thermostat, ces appareils de chauffage présentent comme inconvénient majeur de n'avoir toujours que deux modes de fonctionnement d'une part soit allumé, avec pour but d'atteindre la consigne en partant d'une température inférieure à celle-ci et d'autre part soit éteint, avec pour but d'atteindre la consigne mais cette fois-ci en partant d'une température supérieure à celle-ci. Ce mode de fonctionnement entraîne une importante inertie thermique qui a un impact sur le confort de l'utilisateur.

Il est également connu d'utiliser dans un appareil de chauffage, un capteur pour mesurer la température de la pièce afin d'essayer de limiter le fonctionnement binaire marche ou arrêt de l'appareil. En effet en fonction de celle-ci, les différentes résistances électriques comprises dans l'appareil de chauffage peuvent être allumées ou éteintes indépendamment les unes des autres. Ce moyen de régulation est plus performant car il permet plusieurs régimes de fonctionnement en fonction du nombre de résistances allumées ou éteintes dans l'appareil de chauffage. Le capteur permet de suivre la consigne avec une inertie de moindre importance que les appareils de chauffages précités, mais toujours trop grande du fait que son régime de fonctionnement peut aller d'aucune résistance alimentée, donc l'appareil de chauffage est éteint, à toutes les résistances alimentées.

Enfin, il est également connu d'utiliser un semi-conducteur tel qu'un triac permettant de réguler cette fois-ci, non pas le nombre de résistances alimentées en courant, mais la valeur du courant moyen traversant les résistances de l'appareil de chauffage. La valeur du courant est ainsi modifiée par le triac à partir de la valeur mesurée par un capteur de température. Cependant, l'utilisation d'un triac présente l'inconvénient de générer des courants transitoires qui peuvent interférer avec le réseau de distribution électrique, en sorte que cela ne permet pas de respecter les normes de réglementation concernant les appareils de chauffages électriques. Aussi, le triac n'est utilisé qu'en fonctionnement tout ou rien du triac.

US 7312593 montre un dispositif de régulation thermique de l'état de l'art.

La présente invention a pour but de remédier aux inconvénients précités en proposant un dispositif de régulation automatique pour un appareil de chauffage électrique, c'est-à-dire dont l'inertie thermique est réduite, et ne présentant pas de risques d'interférence de l'appareil de chauffage avec le réseau de distribution électrique.

Ainsi la présente invention consiste en un dispositif de régulation automatique pour un appareil de chauffage électrique, comportant un redresseur-inverseur, dont une entrée est reliée au réseau d'électricité et dont une sortie est reliée à un circuit comprenant un transistor bipolaire à porte isolée (IGBT) relié en série avec au moins une résistance d'un chauffage électrique, des moyens électroniques de contrôle conçus aptes à recevoir des données d'un sélecteur de température actionnable par l'utilisateur, ledit sélecteur étant conçu apte à permettre le choix de la température ambiante à atteindre dans la pièce où est installée l'appareil de chauffage électrique, d'au moins un capteur de température, à savoir un capteur de température de la température ambiante, caractérisé par le fait que lesdits moyens électroniques de contrôle sont conçus aptes à agir sur ledit transistor bipolaire à porte isolée en réglant l'intensité de courant électrique qui circule à travers d'au moins une résistance de l'appareil de chauffage électrique.

Selon encore une autre caractéristique de l'invention, il comporte au moins une résistance, dont le réglage de l'intensité du courant est effectué par modulation à largeur d'impulsion (PWM).

Selon encore une autre caractéristique de l'invention, l'entrée du redresseur est pourvue d'un filtre conçu apte à éviter les interférences produites par radiofréquence.

D'autres buts et avantages de la présente invention apparaîtront au cours de la description de détail qui va suivre en se rapportant à un exemple de réalisation donné à titre indicatif et non limitatif.

La compréhension de cette description sera facilitée en se référant au dessin ci-joint dans lequel :
- la figure 1 est un schéma fonctionnel conforme à la présente invention ;
- la figure 2 est schéma électrique de la partie électronique de l'invention.

A des fins de simplification, l'interconnexion électrique entre les éléments qui constituent le dispositif de régulation automatique selon l'invention, est réalisé par des traits continus comme une représentation unifilaire.

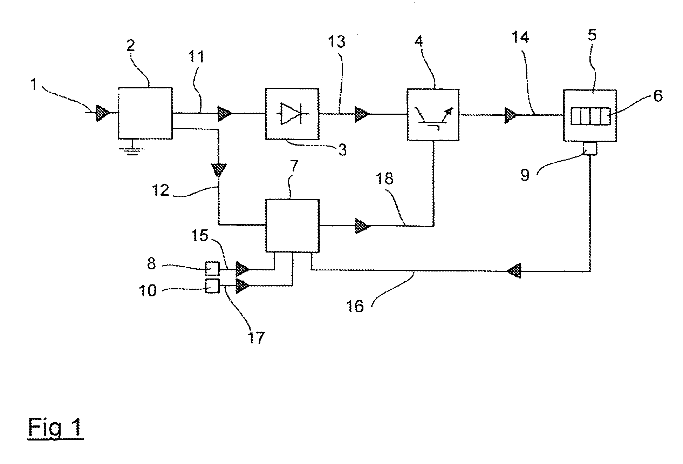

Comme on peut le voir sur la figure 1, le dispositif comporte une alimentation électrique 1 connectée au réseau de distribution, des moyens de filtrage 2 conçus apte à éviter les interférences sur le réseau d'électricité. En aval de ces moyens de filtrage, sont disposés des moyens de correction 3 et des moyens électroniques de contrôle 7, via des pistes respectivement 11 et 12. Les moyens de correction 3 comprennent essentiellement un redresseur-inverseur de la double onde, qui alimente au travers d'un transistor bipolaire à porte isolée 4 au moins une résistance électrique 6 du chauffage électrique 5, via des pistes 13 et 14. Les moyens électroniques de contrôle 7 reçoivent les données fournies par le sélecteur de température 8 à travers une piste 15, les données fournies par un capteur de température 9 à travers une piste 16 et les données fournies par un capteur de température de la pièce 10 grâce à une piste 17.

Les moyens électroniques de contrôle 7 sont équipés d'un logiciel qui est conçu pour gérer le fonctionnement du transistor bipolaire à porte isolée 4 par modulation de largeur d'impulsion et de la régulation du cycle de travail de l'onde fournie par les moyens de correction 3. Le résultat de cette gestion est transmis au transistor bipolaire à porte isolée 4 par une piste 18.

Lorsque le système a été connecté au réseau électrique, l'utilisateur sélectionne la température de consigne du chauffage électrique 5 par l'intermédiaire du sélecteur de température 8.

D'ailleurs ce sélecteur de température peut être intégré au radiateur, mais il sera préférentiellement déporté sur un mur ou similaire.

Ainsi, par ce sélecteur 8 les moyens électroniques de contrôle 7 reçoivent les données de la température sélectionnée par l'utilisateur, les données de température mesurée par le capteur de température ambiante 10 et les données de température atteinte par le chauffage électrique 5, par le capteur de température 9.

Les moyens électroniques de contrôle 7 établissent alors une modulation par largeur d'impulsion qui fixe le cycle de travail du transistor bipolaire à porte isolée. Cette modulation est réalisée préférentiellement avec une porteuse de fréquence 16 kHz.

Ainsi, la résistance 6 du chauffage électrique 5 reçoit une intensité de courant qui oscille entre quelques valeurs minimales et maximales préfixées par le programme informatique des moyens électroniques de contrôle 7, ce qui implique un fonctionnement du chauffage électrique libre d'une fonction échelonnée de l'intensité du courant, ou bien évite des mises en marche et des arrêts du chauffage électrique avec les inerties thermiques résultantes.

Selon un mode préférentiel d'exécution de l'invention, l'appareil de chauffage va donc au travers des moyens électroniques de contrôle 7, en agissant sur le transistor bipolaire 4, réaliser une régulation proportionnelle, intégrale et dérivée afin de se rapprocher rapidement de la valeur sélectionner par l'utilisateur. Une fois le dispositif proche de la valeur de consigne aux alentours de quelques dixièmes de degrés, préférentiellement de quelques dix dixièmes à quelques quinze dixièmes de degrés, on effectue une fonction d'adaptation de la puissance transmise à la résistance de chauffe par l'intermédiaire des moyens électroniques de contrôle 7 en fonction de l'écart en température entre la valeur de consigne et la température ambiante. La puissance ainsi transmise à la résistance de chauffe diminue progressivement au fur et à mesure que l'écart de température diminue.

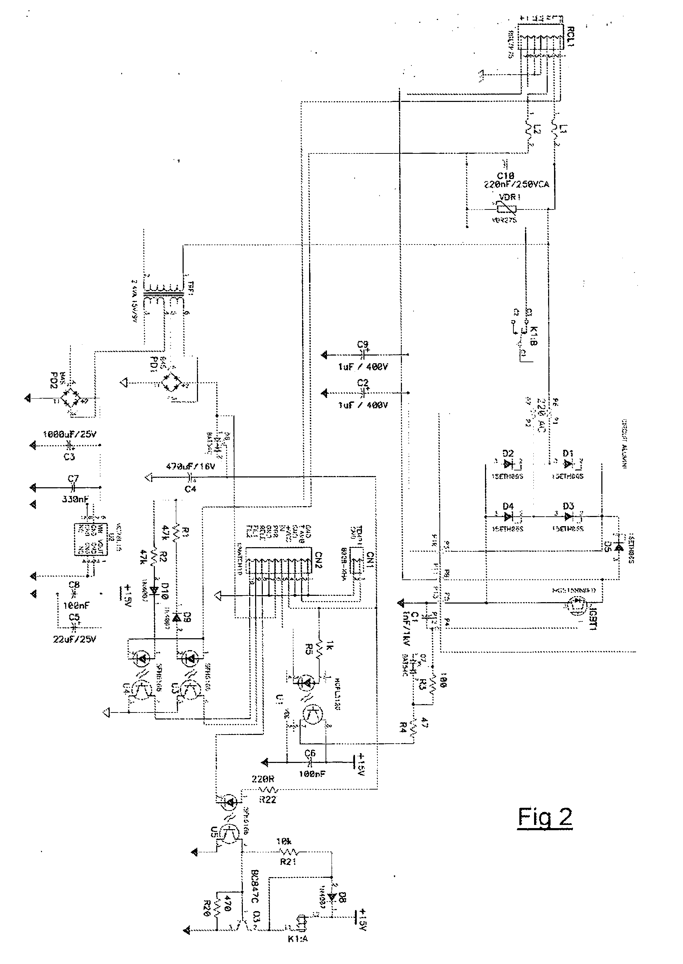

La figure 2 montre les divers éléments électroniques du dispositif de régulation automatique. On peut voir en particulier le transistor bipolaire à porte isolée, le montage redresseur ainsi que toute les liaisons entre ces différents éléments.

## Revendications

1. Dispositif de régulation automatique pour un appareil de chauffage électrique (5) comportant un redresseur-inverseur, dont une entrée est reliée au réseau d'électricité et dont une sortie est reliée à un circuit comprenant un transistor bipolaire à porte isolée (IGBT) (4) relié en série avec au moins une résistance (6) d'un chauffage électrique (5), des moyens électroniques de contrôle (7) conçus aptes à recevoir des données d'un sélecteur de température actionnable par l'utilisateur, ledit sélecteur étant conçu apte à permettre le choix de la température ambiante à atteindre dans la pièce où est installée l'appareil de chauffage électrique (5), d'au moins un capteur de température, à savoir un capteur de température de la température ambiante, **caractérisé par le fait que** lesdits moyens électroniques de contrôle (7) sont conçus aptes à agir sur ledit transistor bipolaire à porte isolée (4) en réglant l'intensité de courant électrique qui circule à travers d'au moins une résistance de l'appareil de chauffage électrique.

2. Dispositif selon la revendication 1 **caractérisé par le fait qu'**il comporte un capteur de température additionnel conçu apte à mesurer la température atteinte par le dispositif.

3. Dispositif selon la revendication 1 ou 2 **caractérisé par le fait qu'**il comporte au moins une résistance, dont le réglage de l'intensité du courant est effectué par modulation à largeur d'impulsion (PWM).

4. Dispositif selon l'une quelconque des revendications précédentes, **caractérisé par le fait que** l'entrée du redresseur (3) est pourvue d'un filtre (2) conçu apte à éviter les interférences produites par radiofréquence.

## Claims

1. Automatic regulation device for an electric heating appliance (5) comprising a rectifier-reverser, one inlet of which is connected to the electricity-supply network and one outlet of which is connected to a circuit comprising an insulated-gate bipolar transistor (IGBT) (4) connected in series with at least one resistor (6) of an electric heating (5), electronic-control means (7) designed capable of receiving data from a temperature selector actuatable by the user, said selector being designed capable of permitting to choose the room temperature to be reached in the room where the electric heating appliance (5) is installed, from at least one temperature sensor, namely an temperature sensor for the ambient temperature, wherein said electronic control means (7) are designed capable of acting on said insulated-gate bipolar transistor (4) by regulating the intensity of the electric current flowing through at least one resistor of the electric heating appliance.

2. Device according to claim 1, wherein it includes an additional temperature sensor designed capable of measuring the temperature reached by the device.

3. Device according to claim 1 or 2, wherein it included at least one resistor the adjustment of the current intensity of which is carried out by pulse width modulation (PWM).

4. Device according to any of the preceding claims, wherein the inlet of the rectifier (3) is provided with a filter (2) designed capable of avoiding the interferences produced by radiofrequency.

## Patentansprüche

1. Automatische Regelungsvorrichtung für eine elektrische Heizvorrichtung (5), umfassend einen Gleichrichter-Wendeschalter, deren einer Einlass an das Stromversorgungsnetz abgeschlossen wird und deren einer Auslass an einen Stromkreis angeschlossen wird, der einen zweipoligen Isolierschicht-Transistor (IGBT) (4) umfasst, der seriell mit mindestens einem Widerstand (6) einer elektrischen Heizung (5) verbunden ist, elektronische Kontrollmittel (7), die fähig vorgesehen sind, um Daten von einem durch den Benutzer betätigbaren Temperatur-Wahlschalter zu empfangen, wobei der besagte Wahlschalter fähig vorgesehen ist, um die Wahl der im Raum, in dem die elektrische Heizvorrichtung (5) ausgestellt ist, zu erreichenden Raumtemperatur zu ermöglichen, von mindestens einem Temperaturfühler, nämlich einem Raumtemperaturfühler, **dadurch gekennzeichnet, dass** die besagten elektronischen Kontrollmittel (7) geeignet vorgesehen sind, um auf den zweipoligen Isolierschicht-Transistor (4) zu wirken, indem sie die Intensität des elektrischen Stromes, der durch mindestens einen Widerstand der elektrischen Heizvorrichtung fließt, regulieren.

2. Vorrichtung nach Anspruch 1, **dadurch gekennzeichnet, dass** sie einen zusätzlichen Temperaturfühler umfasst, der geeignet vorgesehen ist, um die von der Vorrichtung erreichten Temperatur zu messen.

3. Vorrichtung nach Anspruch 1 oder 2, **dadurch gekennzeichnet, dass** sie wenigstens einen Widerstand umfasst, dessen Regelung der Stromintensität durch Pulsweitemodulation (PWM) erfolgt.

4. Vorrichtung nach irgendeinem der vorgehenden Ansprüche, **dadurch gekennzeichnet, dass** der Einlass des Gleichrichters (3) mit einem Filter (2) versehen ist, der geeignet vorgesehen ist, um die durch Radiofrequenz verursachten Interferenzen zu vermeiden.
